# EUROPÄISCHE PATENTSCHRIFT

(11) **EP 1 221 006 B1**
(45) Veröffentlichungstag und Bekanntmachung des Hinweises auf die Patenterteilung: **09.07.2003**
(21) Anmeldenummer: 00967801.2
(22) Anmeldetag: 27.09.2000
(51) Int. Cl.: F16K 3/316

(54) **ABSPERRSCHIEBER**
STOP VALVE
ROBINET-VANNE

(30) Priorität: 14.10.1999 DE 19949512
(43) Veröffentlichungstag der Anmeldung: 10.07.2002
(73) Patentinhaber: KSB Aktiengesellschaft, 67227 Frankenthal (DE)
(72) Erfinder: KUBOTH, Hartmut, 91257 Pegnitz (DE)
(86) Internationale Anmeldenummer: EP0009435
(87) Internationale Veröffentlichungsnummer: WO01027504

(56) Entgegenhaltungen:
- GB-A- 1 311 643
- US-A- 4 281 819
- US-A- 4 487 393
- US-A- 4 512 363

## Beschreibung

Die Erfindung betrifft einen Absperrschieber mit einem Gehäuse und einer Haube sowie einem in dem Gehäuse verschiebbar angeordneten Abschlußkörper, welcher eine oder zwei Dichtflächen trägt, die jeweils auf einem im Gehäuse angeordneten Sitzring zur dichtenden Anlage zu bringen sind, wobei der Abschlußkörper zwei seitliche Führungsleisten besitzt, welche mit entsprechend gestalteten Führungsleisten des Gehäuses in der Weise zusammenwirken, daß eine über den gesamten Verstellweg des Abschlußkörpers erfolgende gleitende Führung und eine Abstützung des Abschlußkörpers gegeben ist.

Die Sitzringe von Absperrschiebern werden bis heute noch vielfach in den Gehäusen der Absperrschieber eingeschweißt. Bei Plattenschiebem, also bei Schiebern mit parallel zu ihrer Bewegungsrichtung verlaufenden Dichtflächen, werden zwar schon austauschbare Sitzringe eingesetzt. Allerdings gelten für derartige Schieber und deren Sitzringe Bedingungen, die nicht auf Schieber mit andersgearteten Abschlußkörpern übertragbar sind. So bewegen sich die Schieberplatten zwischen der Offen- und der Geschlossenstellung in ständigem Kontakt mit zwei parallel zu den Dichtflächen der Schieberplatten verlaufenden, ebenfalls als Flächen ausgebildeten Schieberführungen.

Durch die DE 21 13 415 B2 ist ein Absperrschieber bekannt, dessen plattenförmige Schieberführungen zwei auswechselbare Sitzringe aufnehmen. Jede der Schieberführungen hat auf ihrer vom Abschlußkörper abgewandten Seite ein Nabenteil, das mit einer Ausfräsung versehen ist. Eine in der Schieberführung vorgesehene Bohrung ist durch eine Ringfläche mit der Ausfräsung verbunden. Die Ausfräsung, die Bohrung und die Ringfläche dienen jeweils der Aufnahme eines Sitzringes, der seinerseits mit einem zylindrischen Körper, einem Ringflansch und einer Ringschulter versehen ist. Die Dichtfläche des in die Schieberführung eingesetzten Sitzringes ist auf ihrem gesamten Umfang in Höhe der Fläche der Schieberführung angeordnet. Im übrigen ist jeder Sitzring in einer im Gehäuse des Absperrschiebers vorgesehenen Bohrung angeordnet. Eine Abdichtung des Sitzringes in der Gehäusebohrung erfolgt durch eine an der Stirnseite des Sitzringes vorgesehene O-Ringdichtung.

Die hier gelehrte Art der Sitzringhalterung ist nicht übertragbar auf solche Absperrschieber, die einen Abschlußkörper mit keilförmig zueinander verlaufenden Dichtflächen besitzen oder deren Führung mit Hilfe seitlich im Gehäuse angeordneter Führungsleisten erfolgt.

Der Erfindung liegt die Aufgabe zugrunde, eine Auswechselbarkeit der Sitzringe auch für solche Absperrschieber zu erreichen, die mit seitlich im Gehäuse angeordneten Führungsleisten für den Abschlußkörper ausgestattet sind.

Die gestellte Aufgabe wird erfindungsgemäß dadurch gelöst, daß jeder Sitzring als separates Bauteil ausgebildet ist, das in eine der Außenkontur des Sitzringes angepaßte Aufnahme des Gehäuses einzuschieben ist, wobei Mittel zur Abdichtung des zwischen dem Sitzring und dem Gehäuse gebildeten Spaltes vorgesehen sind und wobei der Sitzring außerhalb seines mit dem Abschlußkörper zusammenwirkenden Dichtbereiches eine Profilierung besitzt, in welche im Gehäuse und/oder in der Haube gehalterte Leisten zum Zwecke der Fixierung des Sitzringes eingreifen.

Durch die erfindungsgemäße Lösung werden bei den in Frage kommenden Absperrschiebern die bisher eingeschweißten, somit nicht austauschbaren Sitzringe durch schnell und leicht auszuwechselnde Sitzringe ersetzt.

In vorteilhafter Ausgestaltung der Erfindung wird vorgeschlagen, daß die Fixierung der Sitzringe durch der Führung des Abschlußkörpers dienende Führungsleisten erfolgt, die im Gehäuse und/oder in der Haube gehaltert sind.

Diese Ausgestaltung besitzt den Vorzug, daß anstelle von zusätzlich zu verwendenden Leisten die ohnehin vorhandenen Führungsleisten die zusätzliche Aufgabe der Halterung der Sitzringe dadurch übernehmen, daß auch die Führungsleisten nicht mehr in das Gehäuse eingeschweißt, sondern auswechselbar im Gehäuse gehaltert werden.

In weiterer zweckmäßiger Ausgestaltung der Erfindung wird für einen mit nur einem Sitzring ausgestatteten Absperrschieber vorgeschlagen, daß gegenüber dem Sitzring ein Gehäusering angeordnet ist, wobei die Fixierung des Sitzringes und des Gehäuseringes durch der Führung des Abschlußkörpers dienende Leisten, vorzugsweise durch Führungsleisten erfolgt, die im Gehäuse und/oder in der Haube gehaltert sind.

Außerdem wird vorgeschlagen, daß die Verbindung zwischen den Leisten bzw. den Führungsleisten und den Sitzringen bzw. dem Sitzring und dem Gehäusering über eine Nut-/Feder-Verbindung erfolgt. Ebenso kann die Verbindung der Leisten bzw. der Führungsleisten mit dem Gehäuse über eine Nut-/Feder-Verbindung vorgenommen werden.

Eine weitere zweckmäßige Ausgestaltung der Erfindung sieht vor, daß jeweils die Abdichtung zwischen Sitzring und Gehäuse in einem Bereich angeordnet ist, dem mindestens eine Spaltstrecke vor- und eine Spaltstrecke nachgeschaltet ist. Für die Abdichtung zwischen Sitzring und Gehäuse kann eine Nutringdichtung Verwendung finden. Für hoch wärmebelastete Armaturen kann auch eine hitzebeständige Dichtung eingesetzt werden.

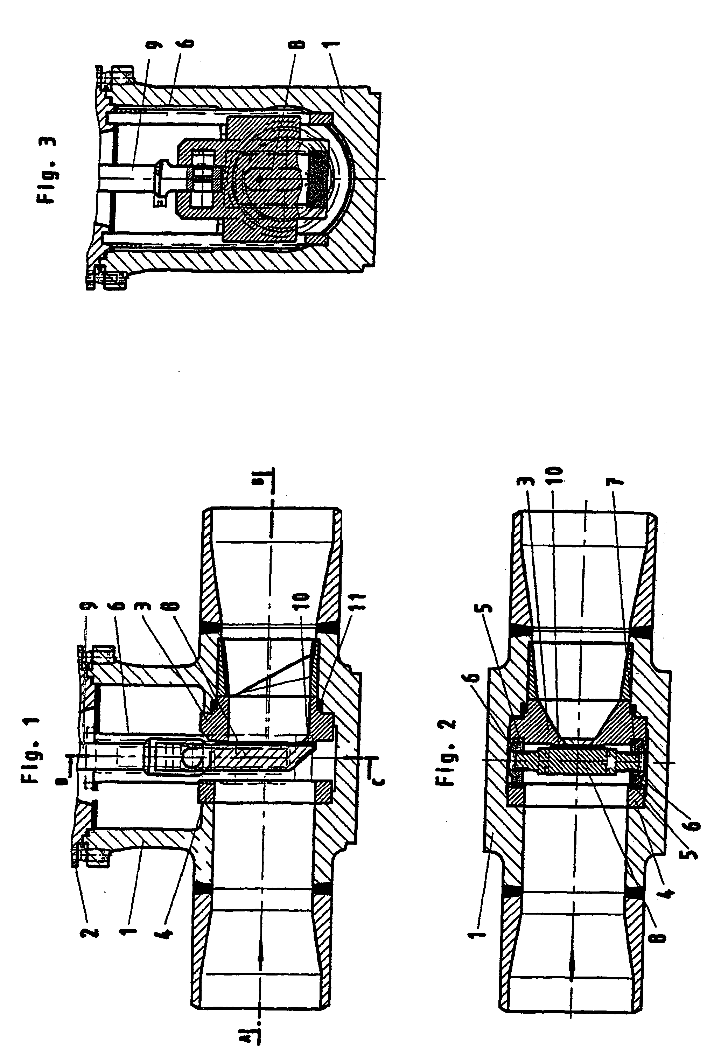

Anhand eines Ausführungsbeispiels wird die Erfindung näher erläutert. Die Zeichnung zeigt in
- Fig. 1: einen Längsschnitt durch einen erfindungsgemäß gestalteten Absperrschieber,
- Fig. 2: eine Schnittdarstellung gemäß der Linie A-B der Fig. 1;
- Fig. 3: eine Schnittdarstellung gemäß der Linie C-D der Fig. 1.

Der Absperrschieber besitzt ein Gehäuse 1, auf dem eine - nur abschnittsweise dargestellte - Haube 2 befestigt ist. In das Gehäuse 1 sind ein Sitzring 3 und ein Gehäusering 4 eingeschoben. Der Sitzring 3 und der Gehäusering 4 sind mit jeweils zwei seitlich angeordneten Profilierungen 5 versehen, in welche Führungsleisten 6 eingreifen. Die Führungsleisten 6 werden von dem Gehäuse 1 und der Haube 2 formschlüssig aufgenommen. Die Führungsleisten 6 können auch ohne Formschluß in das Gehäuse 1 eingelegt werden, da sie bereits durch den Sitzring 3 und den Gehäusering 4 fixiert werden.

Innerhalb der Führungsleisten 6 ist ein mit Führungsleisten 7 versehener Abschlußkörper 8 verschiebbar angeordnet. Mit Hilfe einer an ihm befestigten Spindel 9 kann der Abschlußkörper 8 zwischen einer Offen- und einer Geschlossenstellung auf- und abwärts bewegt werden. In der Geschlossenstellung kommt der Abschlußkörper 8 auf einem Sitz 10, der vom Sitzring 3 gebildet wird, zur dichtenden Auflage.

Der Sitzring 3 und der Gehäusering 4 sind jeweils in eine ihrer Außenkontur angepaßte Aufnahme des Gehäuses 1 eingeschoben. Der zwischen dem Sitzring 3 und dem Gehäuse 1 gebildete Spalt wird durch eine Nutringdichtung 11 abgedichtet. Dem Abdichtungsort ist jeweils eine Spaltstrecke vor- und nachgeschaltet. Bei hochwarmbelasteten Armaturen ist eine hochwarmbeständige Dichtung zwischen der Rückseite des Sitzringes 3 bzw. des Gehäuseringes 4 und dem Gehäuse 1 vorzusehen.

## Patentansprüche

1. Absperrschieber mit einem Gehäuse (1) und einer Haube (2) sowie einem in dem Gehäuse verschiebbar angeordneten Abschlußkörper (8), welcher eine oder zwei Dichtflächen trägt, die jeweils auf einem im Gehäuse angeordneten Sitzring (3) zur dichtenden Anlage zu bringen sind, wobei der Abschlußkörper zwei seitliche Führungsleisten (7) besitzt, welche mit entsprechend gestalteten Führungsleisten (6) des Gehäuses in der Weise zusammenwirken, daß eine über den gesamten Verstellweg des Abschlußkörpers erfolgende gleitende Führung und eine Abstützung des Abschlußkörpers gegeben ist, **dadurch gekennzeichnet, daß** jeder Sitzring (3) als separates Bauteil ausgebildet ist, das in eine der Außenkontur des Sitzringes (3) angepaßte Aufnahme des Gehäuses (1) einzuschieben ist, wobei Mittel (11) zur Abdichtung des zwischen dem Sitzring (3) und dem Gehäuse (1) gebildeten Spaltes vorgesehen sind und wobei der Sitzring (3) außerhalb seines mit dem Abschlußkörper (8) zusammenwirkenden Dichtbereiches eine Profilierung (5) besitzt, in welche im Gehäuse (1) und/oder in der Haube (2) gehalterte Leisten zum Zwecke der Fixierung des Sitzringes (3) eingreifen.

2. Mit zwei Sitzringen ausgestatteter Absperrschieber nach Anspruch 1, **dadurch gekennzeichnet, daß** die Fixierung der Sitzringe (3) durch die der Führung des Abschlußkörpers (8) dienenden Führungsleisten (6) erfolgt, die im Gehäuse (1) und/oder in der Haube (2) gehaltert sind.

3. Mit einem Sitzring ausgestatteter Absperrschieber nach Anspruch 1, **dadurch gekennzeichnet, daß** gegenüber dem Sitzring (3) ein Gehäusering (4) angeordnet ist, wobei die Fixierung des Sitzringes (3) und des Gehäuseringes (4) durch die der Führung des Abschlußkörpers (8) dienenden Führungsleisten (6) erfolgt, die im Gehäuse (1) und/oder in der Haube (2) gehaltert sind.

4. Absperrschieber nach einem der Ansprüche 1 bis 3, **dadurch gekennzeichnet, daß** die Leisten und die Sitzringe (3) über eine Nut-/Feder-Verbindung miteinander verbunden sind.

5. Absperrschieber nach einem der Ansprüche 1 bis 4, **dadurch gekennzeichnet, daß** die Leisten über eine Nut-/Feder-Verbindung mit dem Gehäuse (1) verbunden sind.

6. Absperrschieber nach einem der Ansprüche 1 bis 5, **dadurch gekennzeichnet, daß** jeweils die Abdichtung zwischen Sitzring (3) und Gehäuse (1) in einem Bereich angeordnet ist, dem mindestens eine Spaltstrecke vor- und eine Spaltstrecke nachgeschaltet ist.

7. Absperrschieber nach einem der Ansprüche 1 bis 6, **dadurch gekennzeichnet, daß** für die Abdichtung zwischen Sitzring (3) und Gehäuse (1) eine Nutringdichtung (11) Verwendung findet.

8. Absperrschieber nach einem der Ansprüche 1 bis 6, **dadurch gekennzeichnet, daß** für die Abdichtung zwischen Sitzring (3) und Gehäuse (1) eine hoch wärmebeständige Dichtung Verwendung findet.

## Claims

1. Stop valve having a housing (1) and a hood (2) and also a closing body (8) which is arranged displaceably in the housing and bears one or two sealing surfaces which are each to be brought into sealing contact on a seat ring (3) arranged in the housing, the closing body having two lateral guide strips (7) which interact with correspondingly designed guide strips (6) of the housing in such a manner that a sliding guide, which is effective over the entire displacement path of the closing body, and support of the closing body are provided, **characterized in that** each seat ring (3) is designed as a separate component which is to be pushed into a holder on the housing (1), the said holder being matched to the outer contour of the seat ring (3), with means (11) for sealing the gap formed between the seat ring (3) and the housing (1) being provided, and with the seat ring (3) having, outside its sealing region which interacts with the closing body (8), a profiled structure (5) in which strips which are secured in the housing (1) and/or in the hood (2) engage for the purpose of fixing the seat ring (3) in place.

2. Stop valve fitted with two seat rings according to Claim 1, **characterized in that** the seat rings (3) are fixed in place by the guide strips (6) which are used for guiding the closing body (8) and are secured in the housing (1) and/or in the hood (2).

3. Stop valve fitted with one seat ring according to Claim 1, **characterized in that** a housing ring (4) is arranged opposite the seat ring (3), with the seat ring (3) and the housing ring (4) being fixed in place by the guide strips (6) which are used for guiding the closing body (8) and are secured in the housing (1) and/or in the hood (2).

4. Stop valve according to one of Claims 1 to 3, **characterized in that** the strips and the seat rings (3) are connected to one another via a tongue and groove connection.

5. Stop valve according to one of Claims 1 to 4, **characterized in that** the strips are connected to the housing (1) via a tongue and groove connection.

6. Stop valve according to one of Claims 1 to 5, **characterized in that** the seal between the seat ring (3) and housing (1) is arranged in each case in a region with at least one gap situated upstream and downstream of it.

7. Stop valve according to one of Claims 1 to 6, **characterized in that** a groove-ring seal (11) is used for the seal between the seat ring (3) and housing (1).

8. Stop valve according to one of Claims 1 to 6, **characterized in that** a highly heat-resistant seal is used for the seal between the seat ring (3) and housing (1).

## Revendications

1. Robinet-vanne avec un boîtier (1) et une cloche (2) ainsi qu'un obturateur (8) disposé à coulissement dans le boîtier, qui porte une ou deux surfaces d'étanchéité qui doivent chacune être amenée en butée hermétique sur un anneau de siège (3) disposé dans le boîtier, l'obturateur possédant deux barres conductrices latérales (7) qui coopèrent avec des barres conductrices (6) de configuration correspondante du boîtier de telle manière qu'un guidage et un support de l'obturateur soient obtenus sur toute la course de déplacement de l'obturateur, **caractérisé en ce que** chaque anneau de siège (3) est réalisé sous forme de composant séparé qui doit être enfoncé dans un logement du boîtier (1) adapté au contour extérieur de l'anneau de siège (3), des moyens (11) pour l'étanchéité de la fente formée entre l'anneau de siège (3) et le boîtier (1) étant prévus et l'anneau de siège (3) possédant, en dehors de sa partie d'étanchéité coopérant avec l'obturateur (8) un profilage (5) dans lequel viennent en prise des barres maintenues dans le boîtier (1) et/ou dans la cloche (2) afin de fixer l'anneau de siège (3).

2. Robinet-vanne équipé de deux anneaux de siège selon la revendication 1, **caractérisé en ce que** la fixation des anneaux de siège (3) s'effectue par les barres conductrices (6) servant au guidage de l'obturateur (8), lesquelles sont maintenues dans le boîtier (1) et/ou dans la cloche (2).

3. Robinet-vanne équipé de deux anneaux de siège selon la revendication 1, **caractérisé en ce qu'**un anneau de boîtier (4) est disposé en face de l'anneau de siège (3), la fixation de l'anneau de siège (3) et de l'anneau de boîtier (4) s'effectuant par les barres conductrices (6) servant au guidage de l'obturateur (8), lesquelles sont maintenues dans le boîtier (1) et/ou dans la cloche (2).

4. Robinet-vanne selon l'une quelconque des revendications 1 à 3, **caractérisé en ce que** les barres et les anneaux de siège (3) sont connectés les uns aux autres par le biais d'un raccord à rainure et ressort.

5. Robinet-vanne selon l'une quelconque des revendications 1 à 4, **caractérisé en ce que** les barres sont connectées au boîtier (1) par le biais d'un raccord à rainure et ressort.

6. Robinet-vanne selon l'une quelconque des revendications 1 à 5, **caractérisé en ce que** l'étanchéité respective entre l'anneau de siège (3) et le boîtier (1) est prévue dans une région avant et après laquelle est prévue à chaque fois au moins une distance de fente.

7. Robinet-vanne selon l'une quelconque des revendications 1 à 6, **caractérisé en ce que** l'on utilise un joint en U à lèvres (11) pour l'étanchéité entre l'anneau de siège (3) et le boîtier (1).

8. Robinet-vanne selon l'une quelconque des revendications 1 à 6, **caractérisé en ce que** l'on utilise un joint à haute résistance thermique pour l'étanchéité entre l'anneau de siège (3) et le boîtier (1).
